(19) Europäisches Patentamt
European Patent Office
Office européen des brevets

(11) **EP 0 670 505 B1**

(12) **FASCICULE DE BREVET EUROPEEN**

(45) Date de publication et mention
de la délivrance du brevet:
**23.12.1998 Bulletin 1998/52**

(51) Int Cl.6: **G01V 3/10**

(21) Numéro de dépôt: **95400429.7**

(22) Date de dépôt: **27.02.1995**

(54) **Détecteur de proximité inductif**

Induktive Näherungssensor

Inductive proximity sensor

(84) Etats contractants désignés:
**CH DE DK GB IT LI**

(30) Priorité: **04.03.1994 FR 9402623**

(43) Date de publication de la demande:
**06.09.1995 Bulletin 1995/36**

(73) Titulaire: **SCHNEIDER ELECTRIC SA**
**92100 Boulogne Billancourt (FR)**

(72) Inventeurs:
• **Leonard, Didier**
**F-16290 Moulinars (FR)**
• **Guichard, Christophe**
**F-16000 Angouleme (FR)**

(74) Mandataire: **Carias, Alain**
**Schneider Electric SA**
**Direction Propriété Industrielle**
**33 bis, avenue du Maréchal Joffre**
**92002 Nanterre Cédex (FR)**

(56) Documents cités:
**EP-A- 0 393 359**    **EP-A- 0 399 563**
**WO-A-86/06364**    **DE-A- 4 212 363**
**GB-A- 2 158 583**

## Description

La présente invention concerne un détecteur de proximité inductif du type comportant un circuit oscillant muni d'une bobine de détection, un oscillateur excitant le circuit oscillant sous une fréquence prédéterminée et un circuit de traitement du signal engendré par le circuit oscillant en fonction de l'approche d'un objet métallique.

On sait que des objets métalliques ferreux, par exemple en fer ou en acier, possèdent généralement une perméabilité magnétique forte et une résistivité moyenne, alors que des objets métalliques non ferreux, par exemple en aluminium, cuivre, laiton,..., possèdent une très faible ($\mu_r \cong 1$) perméabilité et une très faible résistivité. Des objets métalliques, placés dans le champ de la bobine de détection d'un détecteur de proximité habituel, entraînent donc des pertes moindres lorsqu'ils sont non ferreux ; il en résulte que, pour ces détecteurs, la portée de détection d'objets non ferreux est sensiblement inférieure à celle d'objets ferreux.

Pour détecter à la même distance des objets ferreux et non ferreux, il faut donc recourir à des dispositions spécifiques. Un détecteur du type indiqué en préambule et permettant de détecter indifféremment, avec la même portée, des objets ferreux et non ferreux est connu d'après le brevet DE-32 28 524 . mais un tel détecteur a l'inconvénient de ne pas autoriser une détection sélective des objets métalliques ferreux d'une part et des objets métalliques non ferreux d'autre part.

Il est d'autre part connu, d'après le document DE-42 12 363, d'exploiter dans un détecteur de métaux le signal engendré par un circuit oscillant à oscillation libre, d'une part dans un détecteur d'amplitude qui délivre un signal d'amortissement lorsque l'amplitude du signal descend au-dessous d'un seuil prédéterminé, d'autre part dans un détecteur complémentaire apte à détecter une variation de la fréquence du signal pour distinguer les métaux ferreux des métaux non ferreux.

L'invention a pour but de rendre un détecteur de proximité inductif apte à détecter de manière sélective et à la même distance des objets métalliques ferreux et des objets métalliques non ferreux, avec une bonne fiabilité de différenciation et l'aide de moyens simples.

Selon l'invention,

- le circuit oscillant est un circuit résonnant excité par un oscillateur de fréquence constante, cette fréquence d'excitation étant inférieure à la fréquence critique propre au circuit résonnant,

- le détecteur complémentaire est un détecteur de phase qui délivre un signal de déphasage lorsque le déphasage du circuit résonnant dépasse un seuil déterminé,

- une logique de discrimination délivre au circuit de sortie un signal de présence d'objet non ferreux quand le signal de déphasage est actif et un signal de présence d'objet ferreux quand le signal de déphasage est inactif et que le signal d'amortissement est actif.

Par fréquence d'excitation sous-critique, on entend que la fréquence d'excitation fournie par l'oscillateur est inférieure à la fréquence d'excitation critique associée à la bobine de détection ; cette fréquence critique est elle-même définie comme étant la fréquence d'excitation pour laquelle l'inductance de la bobine reste pratiquement constante quand on approche un objet ferreux du détecteur, quelle que soit la distance séparant l'objet de la bobine. En utilisant une fréquence d'excitation sous-critique, on différencie l'approche d'objets ferreux et celle d'objets non ferreux, qui se traduisent alors respectivement par une augmentation et une diminution de l'inductance.

Si l'on considère que l'impédance de la bobine est la somme de sa réactance et d'une résistance de pertes, la détection d'un objet non ferreux ne prête pas à ambiguïté dès lors qu'on lie cette détection à une condition de passage de la réactance au-dessous du seuil ; la détection d'un objet ferreux doit par contre, pour lever toute ambiguïté, combiner les conditions de maintien de la réactance au-dessus d'un seuil et de dépassement d'un certain niveau par la résistance de pertes.

La différenciation ainsi obtenue entre les signaux de présence d'objet ferreux et de présence d'objet non ferreux offre une fiabilité satisfaisante.

Certains objets métalliques, par exemple en acier inoxydable, en matériaux amagnétiques à faible conductivité tels que le plomb, le titane, ... ou en matériaux non ferreux de faible épaisseur, ont un comportement magnétique intermédiaire et peuvent donner lieu à une absence de détection, car leur portée de détection est réduite, ou à une détection hésitante, voire erronée. Il est alors prévu que le détecteur de phase délivre un signal d'inhibition lorsque le déphasage du signal du circuit résonnant dépasse un deuxième seuil prédéterminé inférieur au premier seuil de déphasage, le signal d'inhibition étant appliqué à la logique de discrimination pour invalider le signal de présence d'objet ferreux.

La description va être faite à présent d'une forme d'exécution de l'invention, en regard des dessins annexés.

- la figure 1 est un schéma synoptique d'un détecteur inductif de proximité conforme à l'invention ;

- les figures 2 à 4 montrent diverses courbes de variation de l'inductance d'une bobine de détecteur ;

- la figure 5 est un diagramme de Nyquist explicitant la sélectivité du détecteur selon l'invention ;

- la figure 6 est le schéma d'un autre mode de réalisation de l'invention.

- la figure 7 est un graphe explicitant le fonctionnement du détecteur de la figure 6.

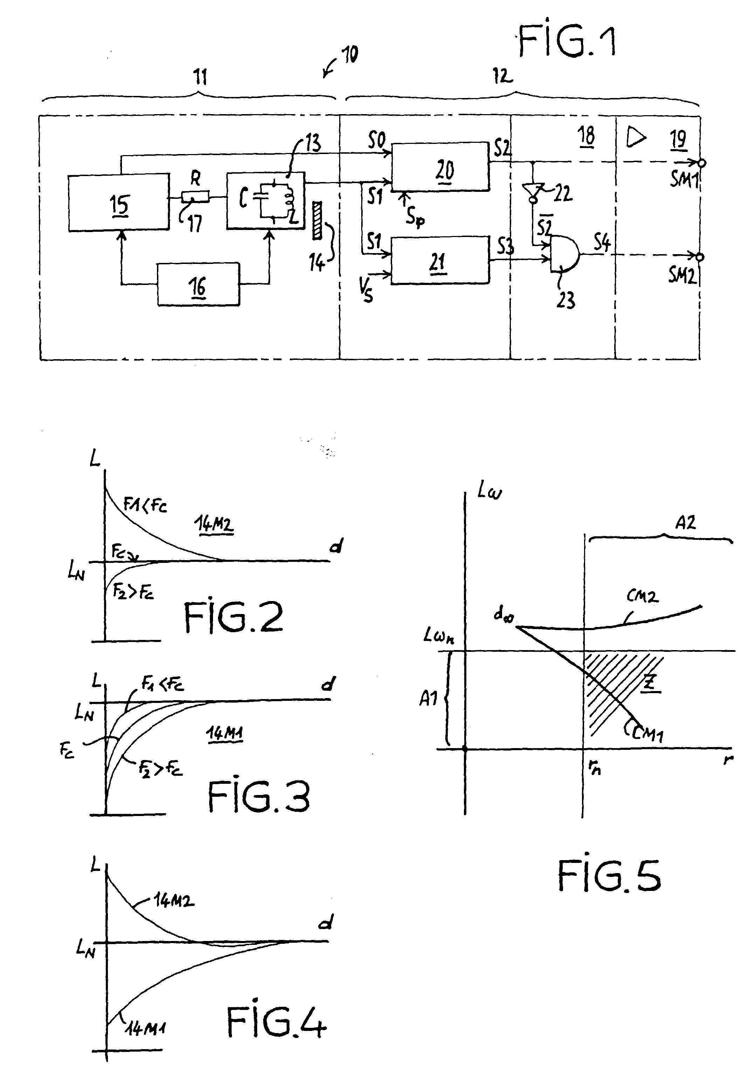

Le détecteur de proximité sélectif 10 illustré sur la figure 1 est de type inductif et comprend une partie détectrice 11 proprement dite et une partie de traitement, d'amplification et de sortie 12.

La partie détectrice présente un circuit résonnant 13 constitué par une bobine d'inductance L et une capacité C, la bobine étant placée de manière à être influencée par l'approche d'un objet métallique 14. Le circuit résonnant 13 présente une fréquence propre $F_{LC}$ et une impédance $Z_{LC}$ et il est excité par un oscillateur 15 qui délivre une oscillation de fréquence $F_0$ et d'amplitude constantes. Un circuit d'accord 16 permet selon les cas d'accorder exactement la fréquence $F_0$ de l'oscillateur et la fréquence propre $F_{LC}$ du circuit résonnant en l'absence d'objet 14 ou de leur imposer un léger déphasage. Une forte impédance 17, par exemple constituée par une résistance R très supérieure à $Z_{LC}$, impose au circuit résonnant un courant d'excitation constant. La partie détectrice 11 délivre à la partie de traitement 12 un signal S0 qui est le signal délivré par l'oscillateur 15 avec ou sans division de fréquence et un signal S1 qui est le signal de tension obtenu aux bornes du circuit résonnant 13 ; S1 est variable en fonction de l'approche d'un objet métallique 14.

La partie de traitement 12 comprend un circuit détecteur et comparateur de phase 20, ci-après désigné simplement détecteur de phase, un circuit détecteur et comparateur d'amplitude 21, ci-après désigné simplement détecteur d'amplitude, une logique de discrimination 18 et un circuit de sortie 19. Le détecteur de phase 20 reçoit les signaux S0 et S1 et compare leur déphasage à un seuil $S\varphi$ pour délivrer à sa sortie un signal de déphasage S2 quand le déphasage excède en valeur absolue le seuil $S\varphi$. Le détecteur d'amplitude 21 reçoit le signal de tension S1 et compare son amplitude à un seuil VS pour délivrer à sa sortie un signal d'amortissement S3 quand l'amplitude de S1 est inférieure à VS. Les détecteurs 20,21 ont des caractéristiques d'hystérésis usuelles.

La logique de discrimination est constituée de toute manière accessible à l'homme de l'art pour remplir la fonction de discrimination qui va être maintenant expliquée. Par exemple, le signal S2 est inversé par un organe inverseur 22 et le signal résultant $\overline{S2}$, ainsi que le signal d'amortissement S3, sont appliqués aux entrées d'un élément logique ET 23 dont le signal de sortie est noté S4. Les signaux S2,S4 respectivement représentatifs de l'approche d'un objet non ferreux et d'un objet ferreux sont appliqués au circuit de sortie 19 pour déterminer une visualisation et/ou une activation sélective (signaux respectifs SM1,SM2) de conducteurs de sortie. L'alimentation des parties 11,12 du détecteur de proximité s'effectue de toute manière usuelle. Il va de soi que le détecteur sélectif peut facilement être transformé en détecteur universel par combinaison OU des signaux S2 d'une part, S3 ou S4 d'autre part, cette combinaison logique étant câblée ou commandée par un commutateur de fonctionnement sélectif-universel.

La figure 2 montre la variation de l'inductance L d'une bobine en fonction de la distance d d'un objet métallique ferreux 14M2, pour différentes fréquences d'excitation de la bobine ; quand l'objet s'approche, pour une fréquence critique $F_C$, l'inductance conserve pratiquement la même valeur nominale $L_N$ quelle que soit la distance ; pour une fréquence $F_1 < F_C$ l'inductance augmente et pour $F_2 > F_C$ l'inductance diminue à mesure que la distance diminue.

La figure 3 montre la variation de l'inductance L à l'approche d'un objet non ferreux 14M1 pour les fréquences précitées $F_C$, $F_1$ et $F_2$.

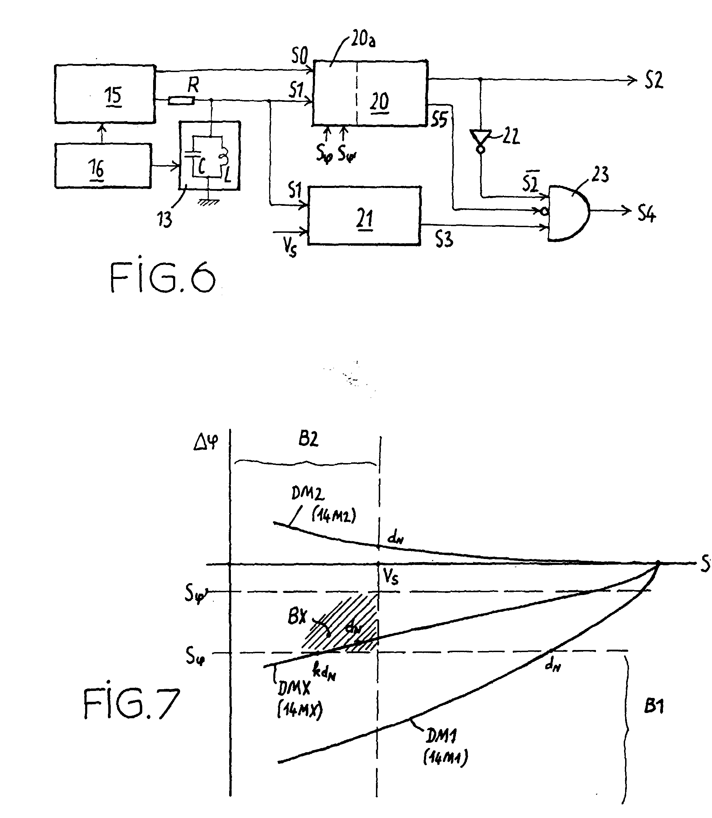

La figure 4 explicite le choix adopté d'une fréquence d'excitation $F_0 < F_C$ pour laquelle l'inductance L augmente à l'approche d'un objet ferreux et diminue à l'approche d'un objet non ferreux, la fréquence critique $F_C$ pouvant être de l'ordre de quelques dizaines de kHz. A la distance nominale du détecteur $d_N$, l'inductance est plus faible dans le premier cas que dans le second.

Si l'on caractérise l'inductance L et les pertes apportées par l'objet cible par une impédance série complexe $Z = r + jL\omega$, et que l'on porte sur un diagramme (figure 5) la résistance de perte r en abscisses et la réactance $L\omega$ en ordonnées, on peut tracer les courbes CM1 et CM2 représentant respectivement l'impédance complexe de la bobine de détection pour une cible non ferreuse 14M1 et une cible ferreuse 14M2. Le signal S2 étant émis dès que la réactance devient inférieure à $L\omega_n$ et le signal S3 émis dès que la résistance de perte r est supérieure à $r_n$, on constate que les aires correspondantes A1,A2 du diagramme se recouvrent selon un quadrant Z de détection non sélective. La logique de discrimination permet de lever l'indétermination en consacrant exclusivement ce quadrant à la détection d'objets non ferreux.

Le graphe de la figure 7 montre la variation du déphasage $\Delta\varphi$ entre les signaux S0 et S1 en fonction de l'amplitude du signal S1 du circuit résonnant. Les courbes DM1,DM2 montrent cette variation pour des objets respectivement non ferreux 14M1 et ferreux 14M2. Les zones de détection des objets 14M1 et 14M2 sont indiquées respectivement en B1 et B2. Lorsqu'il se présente une cible 14MX soit non ferreuse de faible épaisseur, soit en acier inoxydable amagnétique, on souhaite parfois assimiler sans ambiguïté la cible à un objet non ferreux. La courbe DMX montre en effet la variation $\Delta\varphi(S1)$ qui est alors observée ; quand l'objet s'approche, il est d'abord reconnu comme objet ferreux, puis comme objet non ferreux (zone d'incertitude BX). On associe alors selon l'invention au détecteur de phase 20 un deuxième seuil de déphasage $S\varphi'$ inférieur à $S\varphi$. Lorsque le déphasage entre S0 et S1 excède $S\varphi'$, le détecteur de phase 20 émet (figure 6) un signal S5 utilisé pour inhiber l'effet du signal d'amortissement. La détection de l'objet 14MX est alors effectuée pour une portée kdN légèrement inférieure à celle dN de détection des objets 14M1,14M2, de l'ordre de 0,8 dN. Le seuil $S\varphi'$ est choisi de manière que, lorsque l'objet 14MX se rapproche, il soit atteint avant que le seuil d'amplitude Vs ne soit franchi par l'amplitude de S1.

Un détecteur mettant en oeuvre cette caractéristique est illustré schématiquement sur la figure 6, le signal S5 étant par exemple appliqué à une entrée d'inhibition de l'élément ET 23.

Pour étalonner la portée de détection des objets ferreux, on peut soit régler la tension seuil $V_s$, soit régler la résistance R. Pour étalonner la portée de détection des objets non ferreux, on peut accorder la fréquence $F_0$ de l'oscillateur 15 et la fréquence propre $F_{LC}$ du circuit résonnant au moyen du circuit d'accord 16 et adjoindre à l'entrée du détecteur de phase 20 un réseau déphaseur 20a qui introduit entre S0 et S1, en l'absence de cible, un déphasage par exemple de l'ordre de 120 et égal à $S\varphi$ (et éventuellement un déphasage $S\varphi'$ inférieur au précédent), de sorte que le détecteur 20 émet le signal S2 (et éventuellement S5) quand le déphasage devient nul ; en variante, on peut désaccorder les fréquences $F_0, F_{LC}$ d'une valeur égale à $S\varphi$.

## Revendications

1. Détecteur de proximité inductif comportant une bobine de détection d'objet métallique faisant partie d'un circuit oscillant, un circuit de traitement du signal engendré par le circuit oscillant et un circuit de sortie, le circuit de traitement comprenant des moyens de détection d'objets ferreux et d'objets non ferreux, ces moyens comportant un détecteur d'amplitude, ainsi qu'un détecteur complémentaire apte à détecter une autre grandeur, à l'entrée desquels est appliqué le signal de tension du circuit oscillant, le détecteur d'amplitude délivrant un signal d'amortissement lorsque l'amplitude du signal du circuit oscillant descend au-dessous d'un seuil prédéterminé,

   caractérisé par le fait que :

   - le circuit oscillant est un circuit résonnant (13) excité par un oscillateur (15) de fréquence constante $(F_0)$, cette fréquence d'excitation $(F_0)$ étant sous-critique,

   - le détecteur complémentaire est un détecteur de phase (20) qui délivre un signal de déphasage (S2) lorsque le déphasage du circuit résonnant dépasse un seuil déterminé $(S\varphi)$,

   - une logique de discrimination (18) délivre au circuit de sortie (19) un signal de présence d'objet non ferreux (14M1) quand le signal de déphasage (S2) est actif et un signal de présence d'objet ferreux (14M2) quand le signal de déphasage (S2) est inactif et que le signal d'amortissement (S3) est actif.

2. Détecteur selon la revendication 1, caractérisé par le fait que la fréquence de résonance du circuit résonnant (13) et la fréquence d'excitation $(F_0)$ sont initialement accordées et que le signal d'excitation et le signal du circuit résonnant sont appliqués aux entrées d'un réseau déphaseur qui les déphase mutuellement d'une valeur égale au seuil de déphasage $(S\varphi)$.

3. Détecteur selon la revendication 1, caractérisé par le fait que la fréquence de résonance du circuit résonnant (13) et la fréquence d'excitation $(F_0)$ sont initialement désaccordées d'une valeur correspondante à un déphasage égal au seuil de déphasage $(S\varphi)$.

4. Détecteur selon la revendication 1, caractérisé par le fait que le détecteur de phase (20) délivre un signal d'inhibition (S5) lorsque le déphasage du signal du circuit résonnant dépasse un deuxième seuil $(S\varphi')$ prédéterminé inférieur au premier seuil de déphasage $(S\varphi)$, le signal d'inhibition étant appliqué à la logique de discrimination (18) pour invalider le signal (S4) de présence d'objet ferreux.

## Patentansprüche

1. Induktiver Näherungsschalter mit einer Detektionsspule von Metallgegenständen, Bestandteil eines Schwingkreises, eines Verarbeitungskreises des vom Schwingkreis erzeugten Signals und eines Ausgangskreises, wobei der Verarbeitungskreis Detektionsmittel von eisenhaltigen und nicht eisenhaltigen Gegenständen umfasst, wobei diese Mittel aus einem Amplitudendetektor sowie einem zusätzlichen Detektor bestehen, der eine andere Grösse detektieren kann, deren Eingang mit dem Spannungssignal des Schwingkreises beaufschlagt ist, während der Amplitudendetektor ein Dämpfungssignal liefert, wenn die Amplitude des Signals des Schwingkreises einen vorgegebenen Grenzwert unterschreitet, dadurch gekennzeichnet, dass:

   - der Schwingkreis ein von einem Oszillator (15) mit konstanter Frequenz $(F_0)$ erregter Resonanzkreis (13) ist, wobei diese Erregungsfrequenz $(F_0)$ unterkritisch ist,
   - der zusätzliche Detektor ein Phasendetektor (20) ist, der ein Phasenverschiebungssignal (S2) liefert, wenn die Phasenverschiebung des Resonanzkreises einen bestimmten Grenzwert $(S\varphi)$ überschreitet,
   - eine Diskriminierungslogik (18) dem Ausgangskreis (19) ein Präsenzsignal eines nicht eisenhaltigen Gegenstands (14M1) liefert, wenn das Phasenverschiebungssignal (S2) aktiv ist, und ein Präsenzsignal eines eisenhaltigen Gegenstands (14M2), wenn das Phasenverschiebungssignal (S2) inaktiv und das Dämpfungssignal (S3) aktiv ist.

2. Näherungsschalter nach Anspruch 1, dadurch gekennzeichnet, dass die Resonanzfrequenz des Resonanzkreises (13) und die Erregungsfrequenz ($F_0$) ursprünglich abgestimmt sind, und dass das Erregungssignal und das Signal des Resonanzkreises an den Eingängen eines Phasenverschiebungsnetzes angelegt sind, das sie gegenseitig um einen Wert verschiebt, der dem Grenzwert der Phasenverschiebung (S$\varphi$) entspricht.

3. Näherungsschalter nach Anspruch 1, dadurch gekennzeichnet, dass die Resonanzfrequenz des Resonanzkreises (13) und die Erregungsfrequenz ($F_0$) ursprünglich nicht abgestimmt sind, um zwar um einen Wert, der einer Phasenverschiebung gleich dem Grenzwert der Phasenverschiebung (S$\varphi$) entspricht.

4. Näherungsschalter nach Anspruch 1, dadurch gekennzeichnet, dass der Phasendetektor (20) ein Inhibitionssignal (S5) liefert, wenn die Phasenverschiebung des Signals des Resonanzkreises einen zweiten vorgegebenen Grenzwert (S$\varphi$') überschreitet, der kleiner ist als der erste Grenzwert der Phasenverschiebung (S$\varphi$), wobei das Inhibitionssignal die Diskriminierungslogik (18) beaufschlagt, um das Präsenzsignal (S4) eines eisenhaltigen Gegenstands ungültig zu machen.

**Claims**

1. Inductive proximity detector comprising a coil for the detection of a metal object forming part of an oscillating circuit, a circuit processing the signal generated by the oscillating circuit and an output circuit, the processing circuit comprising means of detecting ferrous objects and non-ferrous objects, these means comprising an amplitude detector, and a complementary detector capable of detecting another magnitude, at the input of which the voltage from the oscillating circuit is applied, the amplitude detector outputting a damping signal when the amplitude of the oscillating circuit signal drops below a predetermined threshold, characterized in that:

- the oscillating circuit is a resonant circuit (13) excited by an oscillator (15) oscillating at constant frequency ($F_0$), this excitation frequency ($F_0$) being sub-critical,

- the complementary detector is a phase detector (20) that outputs a phase shift signal (S2) when the phase shift in the resonant circuit exceeds a given threshold S$\varphi$),

- a discrimination logic (18) outputs a signal corresponding to the presence of a non-ferrous object (14M1) to the output circuit when the phase shift signal (S2) is active, and corresponding to the presence of a ferrous object signal (14M2) when the phase shift signal (S2) is inactive and the damping signal (S3) is active.

2. Detector according to claim 1, characterized in that the resonant frequency of the resonant circuit (13) and the excitation frequency ($F_0$) are initially matched and the excitation signal and the resonant circuit signal are applied to the inputs of a phase shift network which shifts the phases mutually by a value equal to the phase shift threshold (s$\varphi$).

3. Detector according to claim 1, characterized in that the resonant frequency of the resonant circuit (13) and the excitation frequency ($F_0$) are initially mismatched by a value corresponding to a phase shift equal to the phase shift threshold (s$\varphi$).

4. Detector according to claim 1, characterized in that the phase detector (20) outputs a disable signal (S5) when the phase shift of the resonant circuit signal exceeds a second predetermined threshold ($S_\varphi$') less than the first phase shift threshold ($S_\varphi$), the disable signal being applied to the discrimination logic (18) to invalidate the presence of a ferrous object signal (S4).

FIG.1

FIG.2

FIG.3

FIG.4

FIG.5

FIG.6

FIG.7